# EUROPÄISCHE PATENTSCHRIFT

(11) **EP 4 466 236 B1**
(45) Veröffentlichungstag und Bekanntmachung des Hinweises auf die Patenterteilung: **11.03.2026**
(21) Anmeldenummer: 23701066.5
(22) Anmeldetag: 17.01.2023
(51) Int. Cl.: C03B 37/012

(54) **VERFAHREN UND HALBZEUG ZUR HERSTELLUNG EINER MEHRKERNFASER**
METHOD AND PREFORM FOR PRODUCING A MULTICORE FIBRE
PROCÉDÉ ET PRÉFORME POUR LA FABRICATION D'UNE FIBRE MULTICOEURS

(30) Priorität: 18.01.2022 EP 22151978
(43) Veröffentlichungstag der Anmeldung: 27.11.2024
(73) Patentinhaber: Heraeus Quarzglas GmbH & Co. KG, 63450 Hanau (DE)
(72) Erfinder: SCHUSTER, Kay, 06803 Bitterfeld-Wolfen (DE); LORENZ, Michael, 06803 Bitterfeld-Wolfen (DE); ROSENBERGER, Manuel, 63801 Kleinostheim (DE); HÜNERMANN, Michael, 63801 Kleinostheim (DE); TIESS, Tobias, 06803 Bitterfeld-Wolfen (DE); KAYSER, Thomas, 06803 Bitterfeld-Wolfen (DE); BÖTTCHER, Martin, 06803 Bitterfeld-Wolfen (DE)
(74) Vertreter: Heraeus IP
(86) Internationale Anmeldenummer: PCT/EP2023/050989
(87) Internationale Veröffentlichungsnummer: WO 2023/139056

(56) Entgegenhaltungen:
- US-A1- 2022 003 921

## Beschreibung

### Technischer Hintergrund

Die vorliegende Erfindung betrifft ein Verfahren zur Herstellung einer Mehrkernfaser, umfassend einen Verfahrensschritt, bei dem ein Bauteil-Ensemble zu der Mehrkernfaser oder zu einer Vorform für die Mehrkernfaser umgeformt wird, das einen eine Mittenbohrung und eine Hohlzylinder-Längsachse aufweisenden Hohlzylinder umfasst, der einen Mantelglasbereich aus Mantelglas und mehrere mit einem Kernglas belegte Kernglasbereiche aufweist, wobei mindestens ein Teil der Mittenbohrung von einem Glas-Füllstab belegt ist, der eine Füllstab-Längsachse und eine Füllstab-Außenmantelfläche aufweist.

Außerdem betrifft die Erfindung ein Halbzeug zur Herstellung einer Mehrkernfaser, umfassend einen eine Mittenbohrung und eine Hohlzylinder-Längsachse aufweisenden Hohlzylinder, der einen Mantelglasbereich aus Mantelglas und mehrere mit einem Kernglas belegte Kernglasbereiche innerhalb des Mantelglasbereichs aufweist, wobei mindestens ein Teil der Mittenbohrung von einem Glas-Füllstab belegt ist, der eine Füllstab-Längsachse und eine Füllstab-Außenmantelfläche aufweist.

Bei Mehrkernfasern sind mehrere lichtwellenleitende, optische Kernbereiche (im Folgenden auch als "Signalkerne" bezeichnet) in einer gemeinsamen Faser integriert. Die Signalkerne erstrecken sich entlang der Faserlängsachse. Sie sind von Mantelmaterial mit geringerem Brechungsindex umgeben und ermöglichen eine voneinander unabhängige Lichtführung. Dieses Faser-Design verspricht eine hohe Kapazität der Signalübertragung, weil in einer einzigen optischen Faser zusammengefasst unterschiedliche Signale simultan in jedem der räumlich getrennten Signalkerne übertragen werden können. Diese Methode der Signalübertragung wird auch als "räumliches Multiplexing" bezeichnet, was insbesondere die Daten-Übertragungskapazität in der optischen Telekommunikation erhöhen kann. Mehrkernfasern gelten außerdem als Schlüsselkomponenten zur Übertragung von Energie zur Materialbearbeitung, als Bestandteil faseroptischer Sensoren in der Mess- und Medizintechnik sowie für Beleuchtungs- und Abbildungszwecke in mikroskopischen oder endoskopischen Geräten.

### Stand der Technik

Mehrkernfasern werden durch Elongieren einer massiven Vorform oder eines Ensembles von Bauteilen erzeugt. Diese bestehen häufig aus synthetisch erzeugtem Quarzglas (SiO₂), das dotiert oder undotiert sein kann. Die Herstellung von synthetischem Quarzglas umfasst beispielsweise Plasma- oder CVD-Abscheidemethoden, die unter den Bezeichnungen OVD-, VAD-, MCVD-, PCVD- oder FCVD-Verfahren bekannt sind. Dabei wird eine flüssige oder gasförmige siliziumhaltige Ausgangssubstanz einer chemischen Reaktion (Hydrolyse, Pyrolyse oder Oxidation) unterzogen und das Reaktionsprodukt - teilchenförmiges SiO₂ - als Feststoff aus der Gasphase auf einer Ablagerungsfläche abgeschieden. Die Ausgangssubstanz ist beispielsweise Siliciumtetrachlorid (SiCl₄) oder eine chlorfreie Siliziumverbindung wie etwa ein Polyalkylsiloxan. Die Reaktionszone ist beispielsweise ein Ofen, eine Brennerflamme oder ein Lichtbogen (Plasma).

Beim sogenannten "Stack-and-Draw-Verfahren" werden Kernstäbe und Glaszylinder unterschiedlicher Durchmesser so zusammengestapelt, dass sie eine relativ hohe Packungsdichte und eine gewisse Symmetrie ergeben. Die zylinderförmigen Bauteile werden in ein Hüllrohr eingeführt und darin räumlich fixiert. Dieses Ensemble wird zu der Mehrkernfaser gezogen oder es wird vorab zu einer Vorform weiterverarbeitet, aus der anschließend die Mehrkernfaser gezogen wird.

Das "Stack-and-Draw-Verfahren" erfordert einen hohen Justageaufwand und es führt leicht zu Maßhaltigkeitsfehlern und zum Eintrag von Verunreinigungen infolge des großen Anteils freier Bauteil-Oberflächen. Zudem weist die elongierte Vorform wegen Unterschieden in der radialen Packungsdichte häufig unterschiedliche Radiuswerte in azimutaler Richtung auf, die durch Rundschleifen ausgeglichen werden müssen.

Die US 2022/003921 A1 beschreibt ein Halbzeug und ein Verfahren zur Herstellung einer Mehrkernfaser, indem durch Erhitzen oder durch Pulver-Formgebungsverfahren in einem Mantelglas-Vollzylinder fünf kreisrunde Öffnungen erzeugt werden, wobei eine mittig angeordnete Öffnung von vier umliegenden Öffnungen gleichmäßig umgeben ist und mit diesen überlappt. Die äußeren vier Öffnungsbereiche werden mit Kernglasstäben belegt, in den noch freien mittleren Öffnungsbereich wird ein Stab aus einem niedrigviskosen Glas und mit polygonalem Querschnitt, und in einen Leerraum neben diesem Stab wird ein Markerstab eingesetzt. In einem späteren Verfahrensstadium werden alle Bauteile des Ensembles erhitzt wobei der Stab aus dem niedrigviskosen Glas als erstes erweicht und die Lücken auffüllt.

Aus der US 2016/347645 A1 sind ein Halbzeug und ein Verfahren zur Herstellung einer Mehrkernfaser durch Elongieren des Halbzeugs bekannt. Das Halbzeug bildet eine mehrteilige Faservorform, die sich zusammensetzt aus einem einteiligen Hüllrohr aus Mantelglas, ausgelegt zur Aufnahme und zur axialen Führung eines Stapels aus drei baugleichen zylinderförmigen Stapelstücken aus Mantelglas, die jeweils Durchgangsbohrungen sowie eine Längsnut an ihrer Zylindermantelfläche aufweisen, mehreren Kernstäben zum Einsetzen in die Durchgangsbohrungen, und mehreren Markerstäben zum Einsetzen in die Längsnuten. Innerhalb der Hüllrohr-Bohrung werden die Stapelstücke so übereinander angeordnet, dass die Durchgangsbohrungen und die Längsnuten fluchten. Die von den Markerstäben gebildete Markerzone der Faservorform verläuft an der Innenmantelfläche des Hüllrohres.

Die US 8,532,454 B2 offenbart eine Mehrkernfaser mit sieben Kernbereichen.

Bei einer anderen bekannten Verfahrensweise zur Herstellung einer Vorform für eine Mehrkernfaser, wie sie beispielsweise in der US 2021/0300812 A1 beschrieben ist, werden durch Längsperforation eines Mantelglas-Zylinders auf Basis von synthetischem SiO₂ eine Vielzahl von Durchgangslöchern erzeugt, die in Richtung der Zylinderlängsachse verlaufen. In die Durchgangslöcher wird jeweils ein Kernstab eingesetzt, der ein Kernmaterial mit größerem Brechungsindex als das Glas des Mantelglas-Zylinders enthält. Bei einer großen Anzahl von Durchgangslöchern kann zwischen benachbarten Löchern eine dünne und leicht zerbrechliche Wandung verbleiben. Um die Bruchgefahr zu verringen, wird vorgeschlagen, die notwendige Anzahl an Durchgangslöcher im Mantelglas-Zylinder sukzessive zu erzeugen, und zwischenzeitlich mindestens einen Teil der Durchgangslöcher mit einem Kernstab zu belegen und zu verschmelzen.

Der Mantelglas-Zylinder ist langgestreckt. Die Durchgangslöcher haben ein großes Aspektverhältnis (Verhältnis von Länge und Durchmesser), was grundsätzlich deren maßgenaue Fertigung und exakte Ausrichtung parallel zur Längsachse des Mantelglas-Hohlzylinders erschwert.

Bei den aus der US 2015/284286 A1 und aus der US 2015/0307387 A1 bekannten Verfahren wird ein Mantelglas-Hohlzylinder in Form eines nach dem OVD-Verfahren erzeugten Sootkörpers auf Basis von SiO₂ verwendet (SiO₂-Sootkörper), der eine Dichte zwischen 0,8 g/cm³ und 1,6 g/cm³ aufweist. Beim OVD-Verfahren ist die Ablagerungsfläche im Allgemeinen die Außenmantelfläche eines um seine Längsachse rotierenden stab- oder rohrförmigen Abscheidedorns. Durch reversierende Hin- und Herbewegung der Reaktionszone wird ein im Wesentlichen zylinderförmiger Sootkörper abgeschieden. Nach Abschluss des Abscheideprozesses wird der Abscheidedorn entfernt, so dass eine zentrale Durchgangsöffnung in der Mittelachse des zylinderförmigen Sootkörpers verbleibt. In den so erzeugten Mantelglas-Hohlzylinder werden Längsbohrungen zur Aufnahme von Kernglasstäben eingebracht, wobei die im Vergleich zu Quarzglas geringere Dichte des SiO₂-Sootkörpers die Herstellung maßgenauer Längsbohrungen erleichtert. Die herstellungsbedingt verbleibende zentrale "OVD-Durchgangsöffnung" kann beim Kollabieren zu asymmetrischen Verformungen führen und das Faser-Design zerstören. Außerdem verringert sich durch Kollabieren die Querschnittsfläche des Mantelglasanteils. Diese Nachteile können durch Einsetzen eines die OVD-Durchgangsöffnung verschließenden Füllstabes verhindert werden. Der Füllstab besteht aus Glas, das im Wesentlichen den gleichen Brechungsindex hat wie der Mantelglas-Hohlzylinder. Der Füllstab kann ebenfalls durch ein OVD-Verfahren oder durch Pressformen oder durch eine Kombination aus Pressformen und OVD-Verfahren hergestellt werden. Außerdem wird in den Mantelglas-Hohlzylinder ein Kanal zur Aufnahme eines Markerelements eingebracht. Der Kanal wird im randnahen Bereich des Mantelglas-Hohlzylinders durch mechanisches Bohren erzeugt.

Die Markerelemente bilden in der Mehrkernfaser durchgängige, linienartige Markerzonen und dienen zur Symmetriebrechung, um die Signalkerne sowie deren Positionen zueinander und in Bezug auf die Faser-Mittelachse eindeutig identifizieren und zuordnen zu können. Dies ist beispielsweise erforderlich, damit zwei Mehrkernfasern über ihre Stirnseiten mittels herkömmlicher Spleißmethoden dämpfungsarm zusammengefügt werden können.

Zum Spleißen der Mehrkernfaser werden die zu verbindenden Faserenden so angeordnet, dass ihre Stirnseiten einander zugewandt sind. Bei einer bekannten Methode wird am gegenüberliegenden Faserende in alle Signalkerne gleichzeitig Licht eingespeist, und am Faserende der anderen Mehrkernfaser kollektiv mittels Fotodetektor und Leistungsmesser erfasst. Insbesondere in Fällen, bei denen das eine Ende der Mehrkernfaser zur Lichteinspeisung nicht verfügbar ist, wird diese Mehrkernfaser seitlich mit Licht durchstrahlt. Durch Relativ-Verschiebung der Mehrkernfaser-Stirnseiten in horizontaler und vertikaler Richtung und durch RelativVerdrehung in azimutaler Richtung werden die Faserenden in einer Fusionsspleißmaschine automatisiert solange zueinander ausgerichtet, bis die Signalkerne einander richtig zugeordnet sind und die kollektive empfangene Lichtleistung maximal wird, und dann in dieser Position miteinander verschmolzen.

### Technische Aufgabe

Je größer die Anzahl an Mehrfachkernen ist, umso größer ist theoretisch die Zunahme der Daten-Übertragungskapazität im Vergleich zu einem Lichtwellenleiter mit einem einzigen Faserkern (Einzelmodenfaser oder Mehrmodenfaser). Andererseits besteht grundsätzlich die Anforderung, dass jeder der Mehrfachkerne eine optische Dämpfung hat, die in etwa der eines Lichtwellenleiters mit Einzelkern entspricht. Dies erfordert, dass das Faserdesign keine zusätzliche Dämpfung verursacht oder die unabhängige Informationsübertragung der Signalkerne als Störsignal beeinträchtigt. Dies kann aber durch ein sogenanntes "Übersprechen" zwischen den Mehrfachkernen insbesondere dann verursacht werden kann, wenn diese zu dicht beieinander liegen. Dieser Effekt erfordert somit die Einhaltung eines gewissen Mindestabstands zwischen den Faserkernen. Aus diesen Gründen besteht das Bedürfnis, die im radialen Querschnitt der Mehrkernfaser zur Verfügung stehende Querschnittsfläche möglichst vollständig für die Belegung mit den Mehrfachkernen zu nutzen.

Die in das Faser-Design zusätzlich einzufügenden Markerzonen sollten daher einen kleinen Anteil am Faserquerschnitt einnehmen. Eine geringe Größe der Markerzonen ist auch vorteilhaft, um anderen unerwünschten Effekten entgegenzuwirken, wie beispielsweise dem sogenannten Faser-Curl oder in der Faser induzierten Spannungen. Der Durchmesser des Kanals zur Aufnahme des Markerelements ist daher gering und in der Regel deutlich kleiner als der Durchmesser der Bohrungen für die Aufnahme der Kernstäbe. Typischerweise liegt der Kanal-Durchmesser im Mantelglas-Hohlzylinder vor dem Faserziehprozess bei weniger als 15mm, einhergehend mit einem Aspektverhältnis oberhalb von 65 (bei einer Hohlzylinderlänge von etwa 1m).

Die maßgenaue Herstellung und exakte Ausrichtung derartig dünner Kanäle in einem Mantelglas-Hohlzylinder sind selbst bei Einsatz von Hochpräzisions-Bohrmaschinen schwierig. Außerdem hat es sich gezeigt, dass gerade beim Bohren dünner Kanäle verstärkt Risse in der Kanalwandung erzeugt werden. Der Kostenaufwand für die Herstellung des Mantelglas-Hohlzylinders aus synthetischem Quarzglas ist groß und der Verlust besonders schmerzlich, wenn ausgerechnet die kleine Bohrung für die Aufnahme des Markerelements zum Ausschuss des ansonsten fertiggestellten Mantelglas-Hohlzylinders führt.

Erschwerend kommt hinzu, dass das Schneiden und Spleißen der Mehrkernfaser gemäß den spezifischen Anforderungen beim bestimmungsgemäßen Einsatz an jeder beliebigen Position erfolgen kann, so dass auf eine konsistente Geometrie entlang der gesamten Faserlänge vertraut werden muss, um nicht auf Messungen angewiesen zu sein.

Es ist daher eine Aufgabe der Erfindung, ein Verfahren zur Herstellung von Mehrkernfasern ohne zentralen Signalkern anzugeben, das Nachteile der bekannten Verfahren vermindert, und bei dem insbesondere die Gefahr von Ausschuss bei der Fertigstellung des Mantelglas-Hohlzylinders vermindert ist.

Außerdem liegt der Erfindung die Aufgabe zugrunde, ein Halbzeug bereitzustellen, das geeignet ist zur Herstellung einer Mehrkernfaser ohne zentralen Signalkern, die sich insbesondere durch einen geringen "Faser-Curl" auszeichnet.

Als "Faser-Curl" wird eine Eigenschaft von Glasfasern bezeichnet, die als Krümmungsgrad über eine bestimmte Länge der Faser definiert ist. Die Krümmung resultiert aus thermischen Spannungen, die während der Faserherstellung entstehen. Eine hohes "Faser-Curl" erschwert das dämpfungsarme Spleißen der Mehrkernfaser.

### Allgemeine Beschreibung der Erfindung

Hinsichtlich des Verfahrens wird diese Aufgabe ausgehend von dem eingangs genannten Verfahren erfindungsgemäß dadurch gelöst, dass im oder am Füllstab eine sich in Richtung der Füllstab-Längsachse erstreckende Ausnehmung erzeugt wird, in die ein Markerelement aus Markerglas eingesetzt wird oder die das Markerelement bildet.

Es wird ein Mantelglas-Hohlzylinder eingesetzt, der eine Mittenbohrung aufweist. Derartige Hohlzylinder werden beispielsweise und bevorzugt anhand des OVD-Verfahrens (Outside Vapor Deposition) erhalten, nachdem der Abscheidedorn entfernt worden ist. Die Herstellung von Mantelglas-Hohlzylindern nach dem OVD-Verfahren ist kostengünstig im Vergleich zu anderen Herstellungsmethoden, insbesondere im Vergleich zum VAD-Verfahren (Vapor Phase Axial Deposition). Sie geht allerdings mit dem Nachteil einher, dass die erwähnte zentrale Mittenbohrung verbleibt. Diese kann vollständig oder teilweise mittels eines Glas-Füllmaterials verschlossen werden, das bereitgestellt wird durch mehrere Füllstäbe oder durch einen einzigen Füllstab, der das Glas-Füllmaterial enthält.

Bei Ausführungsformen, bei denen die chemische Zusammensetzung des Glas-Füllstabs derjenigen des Mantelglases entspricht, bildet das Glas-Füllmaterial des Füllstabs in der Mehrkernfaser einen Teil des optischen Mantels. Bei Ausführungsformen, bei denen sich die chemischen Zusammensetzungen von Glas-Füllmaterial und Mantelglas unterscheiden, kann dem Glas-Füllmaterial des Füllstabs in der Mehrkernfaser eine zusätzliche Funktion zufallen, beispielsweise kann es als "Stresszone" wirken, die in radialer Richtung wirkende Druck- oder Zugspannungen innerhalb der Faser erzeugt und/oder kompensiert.

Das erfindungsgemäße Verfahren dient zur Herstellung einer Mehrkernfaser ohne zentralen Signalkern. Die zentrale Mittenbohrung wird dafür genutzt, um zusätzlich zum Glas-Füllmaterial des Füllstabs ein Markerelement einzufügen. Das Glas-Füllmaterial enthält keinen für die Signalübertragung geeigneten Kernbereich.

Im oder am Füllstab wird mindestens eine sich in Richtung der Füllstab-Längsachse erstreckende Ausnehmung erzeugt, in die das Markerelement eingesetzt wird oder die das Markerelement bildet.

Das Markerelement liegt im Bauteil-Ensemble als Bauteil, als Beschichtung eines Bauteils oder als Hohlraum vor und bildet in der Mehrkernfaser eine durchgängige, linienartige Markerzone aus einem Markermaterial oder aus Luft. Die Markerzone kann beispielsweise beim Spleißen zur Symmetriebrechung und zur eindeutigen Identifizierung der Signalkerne sowie deren Positionen zueinander und in Bezug auf die Faser-Mittelachse dienen.

Die Ausnehmung ist beispielsweise ein Hohlkanal, der sich durch den Füllstab entlang der Füllstab-Längsachse erstreckt. Der Füllstab bildet in dem Fall die Umrandung eines Markerelements in Form eines luftgefüllten, langgestreckten Hohlraums. Oder das Markerelement ist in einer Ausnehmung an der Außenmantelfläche eines zylinderförmigen Füllstab angeordnet.

Da sich das Markerelement im oder am Glas-Füllstab und damit innerhalb der Mittenbohrung des Mantelglas-Hohlzylinders aber nicht im Mantelglas des Hohlzylinders befindet, entfällt die Notwendigkeit dafür, den Mantelglas-Hohlzylinder zwecks Einfügung des Markerelements anzupassen, beispielsweise durch eine mechanische Bearbeitung und insbesondere durch Erzeugung einer Bohrung für die Aufnahme des Markerelements im Mantelglas-Hohlzylinder. Das mit einer derartigen Anpassung des Mantelglas-Hohlzylinders einhergehende Beschädigungsrisiko entfällt somit.

Die Maßhaltigkeit und die Geradheit der Mittenbohrung des Mantelglas-Hohlzylinders können durch das OVD-Herstellungsverfahren selbst und - sofern erforderlich - durch nachfolgende Maßnahmen einfach gewährleistet werden. Zu den dafür geeigneten nachfolgenden Maßnahmen gehören beispielsweise eine mechanische Nachbearbeitung der Mittenbohrung und/oder ein Elongierprozess, dem der im OVD-Abscheideprozess erzeugte Ausgangs-Hohlzylinder unterzogen wird, um daraus einen Rohrstrang zu elongieren, aus dem der Mantelglas-Hohlzylinder erzeugt wird oder aus dem mehrere Mantelglas-Hohlzylinder abgelängt werden. Der Elongierprozess erfolgt vorzugsweise ohne Einsatz eines Formwerkzeugs, das am abgezogenen Rohrstrangs angreift, um Beschädigungen der Rohrstrang-Oberfläche zu vermeiden.

Ebenso können die Maßhaltigkeit und die Geradheit eines passgenau in die Mittenbohrung einzusetzenden Füllstabs durch mechanische Bearbeitung und/oder mittels eines derartigen Elongierprozesses vergleichsweise einfach gewährleistet werden. Diese mechanische Bearbeitung kann gegebenenfalls ein Außenbearbeitungsverfahren sein, was in der Regel deutlich weniger aufwändig ist als ein Innenbearbeitungsverfahren.

Eine achsenparallele Ausrichtung des Markerelements wird erleichtert, indem es von der Ausnehmung des Füllstabs gebildet wird, die sich in Richtung der Füllstab-Längsachse erstreckt, oder indem es in die sich in Richtung der Füllstab-Längsachse erstreckende Ausnehmung eingesetzt wird .

Das Einsetzen des Markerelements in die Ausnehmung erfolgt beispielsweise durch Einlegen eines zylinderförmigen Bauteils (Stab oder Rohr) aus einem Markerglas, das sich parallel zu der Außenmantelfläche des Füllstabs erstreckt, oder durch Einbringen einer Schüttung von Teilchen aus dem Markerglas oder durch Innenbeschichtung der der Ausnehmung mit dem Markerglas.

Die Ausnehmung ist beispielsweise als Bohrung im Füllstab und vorzugsweise als Längsrille (Längsnut) an der Außenmantelfläche des Füllstabs ausgeführt. Die rillenförmige Ausnehmung ist beispielsweise mit einem zylinderförmigen Bauteil aus einem Markermaterial oder mit einem partikelförmigen Markermaterial gefüllt. Das partikelförmige Markermaterial kann durch thermische Verdichtung oder durch Hinzufügen von Bindemittel eine gewisse Formstabilität haben. Das Markermaterial füllt die Ausnehmung vollständig oder teilweise aus. Dabei gewährleistet die Ausnehmung einen Formschluss zwischen Markerelement und Füllstab. Markerelement und Füllstab können auch vorab (das heißt: vor dem Einbringen in die Mittenbohrung) durch Stoffschluss miteinander verbunden werden, beispielsweise durch Zusammensintern oder Verschmelzen.

Besonders bevorzugt ist eine Verfahrensweise, bei der ein Füllstab mit einer Längsrille versehen wird. Denn zum einen ist eine Längsrille in der Füllstab-Außenmantelfläche im Vergleich zu einer Bohrung im Füllstab besonders einfach und geometrisch exakt zu fertigen; beispielsweise durch Fräsen mittels mechanischem Fräser oder durch Laserablation. Zum anderen ist die so erzeugte Längsrille genauso so exakt und gerade wie der Füllstab selbst. Und darüber hinaus können die Tiefe beziehungsweise die Öffnungsweite der Längsrille fast beliebig klein gehalten werden; beispielsweise beides weniger als 15mm, vorzugsweise weniger als 10mm und besonders bevorzugt weniger als 5mm. Die Längsrille kann als Wandung eines luftgefüllten Hohlkanals umgeformt werden, der als Markerelement dienen kann, beziehungsweise kann die Längsrille auch mit einem Markermaterial gefüllt werden. Somit sind auf einfache Weise geometrisch exakte Markerelemente mit geringem Volumen herstellbar, die in der Vorform beziehungsweise im Bauteil-Ensemble eine Abweichung ihrer axialen Ausrichtung von weniger als 0,3mm/m haben und die demgemäß in der Mehrkernfaser entsprechend kleine und hochgenaue Markerzonen ausbilden.

Das Füllen der Längsrille mit dem Markermaterial erfolgt beispielsweise durch Einlegen eines zylinderförmigen Bauteils (Stab oder Rohr) aus dem Markermaterial oder durch Einbringen einer Schüttung von Teilchen aus dem Markermaterial oder durch Innenbeschichtung der Längsrille mit dem Markermaterial. Das zylinderförmige Bauteil aus dem Markermaterial beziehungsweise die Schüttung aus dem Markermaterial können in der Längsrille zusätzlich durch Verschmelzen fixiert werden.

Die vergleichsweise einfach zu erreichende Geradheit von Füllstab und Mittenbohrung erleichtern auch die achsenparallele Ausrichtung des Markerelements. Dies gilt insbesondere für eine besonders bevorzugte Verfahrensweise bei der das Markerelement sich entlang der Füllstab-Längsachse erstreckt und vor dem Umformen zur Vorform beziehungsweise zur Mehrkernfaser in die Ausnehmung eingeschmolzen wird.

Dabei wird das Markerelement (Bauteil, Schüttung, Schicht) in der Ausnehmung durch Verschmelzen fixiert. Dazu wird es über mindestens einen Teil seiner Länge, vorzugsweise lokal an mehreren über seine Länge verteilten Stellen und idealerweise über seine gesamte Länge in die Ausnehmung eingeschmolzen. Der mit dem Markerelement-Material gefüllte Füllstab wird im Folgenden auch als "modifizierter Füllstab" bezeichnet.

Durch das Einschmelzen des Markerelements in die Ausnehmung vor dem Umformen des Bauteil-Ensembles zu einer Mehrkernfaser oder zu einer Vorform kann gewährleistet werden, dass die Seitenränder der mit dem eingeschmolzenen Markerelement gefüllten Ausnehmung weitgehend stufenlose, kontinuierliche Übergänge zur Außenmantelfläche des modifizierten Füllstabs bilden und so strukturelle Störstellen beim Faserziehprozess vermieden werden. Dies wirkt sich positiv auf die Maßhaltigkeit der Mehrkernfaser aus. Das Markerelement füllt beispielsweise die Ausnehmung vollständig aus und hat idealerweise eine an die Außenkontur der Füllstab-Außenmantelfläche angepasste Wölbung.

Somit ist bei einer bevorzugten Verfahrensweise vorgesehen, dass das Markerelement eine Länge hat und dass das Einschmelzen entlang mindestens 80% dieser Länge, vorzugsweise entlang mindestens 90% dieser Länge vollständig, streckenweise oder punktuell erfolgt.

Das Einschmelzen des Markerelements umfasst bevorzugt einen Verfahrensschritt, bei dem der Füllstab mit horizontal orientierter Füllstab-Längsachse so gelagert wird, dass sich die Ausnehmung an einer Oberseite der Füllstab-Außenmantelfläche befindet, wobei das in der Ausnehmung eingesetzte Material des Markerelements mittels einer Heizquelle erhitzt und erweicht wird.

Durch das Einschmelzen des Markerelements bei horizontal orientierter Füllstab-Längsachse sinkt das Material des Markerelements, sobald es beispielsweise mittels eines Brenners oder eines Lasers lokal erhitzt und erweicht worden ist, infolge der Schwerkraft nach unten und füllt dabei in der Ausnehmung verbliebene Hohlräume aus. Die Oberflächenspannung kann zu einer Abrundung des an die Atmosphäre angrenzenden, freien Oberflächenbereichs führen.

Auf diese Weise gelingt es wesentlich besser und einfacher, die Ausnehmung gleichmäßig und vorzugsweise vollständig auszufüllen, als dies beispielsweise der Fall wäre, wenn das Markerelement und die Ausnehmung beim Einschmelzprozess in vertikaler Richtung orientiert sind.

Das in der Ausnehmung eingeschmolzene Markerelement ist in Bezug auf den Füllstab fixiert, was die Handhabung des modifizierten Füllstabs im weiteren Faserfertigungsprozess vereinfacht. Beim Einschmelzen kann infolge der Oberflächenspannung eine gewisse Abrundung des Markermaterials und damit eine Anpassung an die Kontur der Außenmantelfläche des Füllstabs erreicht werden. Nach dem Einschmelzen des Markerelements können Fehlerfreiheit und Qualität der Einschmelzung des modifizierten Füllstabs kontrolliert und sofern erforderlich verbessert werden.

Somit wird das Bauteil-Ensemble mit einem Markerelement ausgestattet, ohne dass dafür eine separate Bohrung im Mantelglas-Hohlzylinder - verbunden mit den oben erläuterten Risiken und Schwierigkeiten - erzeugt werden muss. Gleichzeitig kann trotz hohem Aspektverhältnis eine hohe Genauigkeit gewährleistet werden, die sich beispielsweise in der Vorform beziehungsweise im Bauteil-Ensemble darin manifestiert, dass die Achsenparallelität des Markerelements eine Abweichung von weniger als 0,3mm/m hat.

Bei einer bevorzugten Verfahrensweise liegt das Markerelement als Stab vor, der sich parallel zu einem Füllstab oder zu mehreren Füllstäben innerhalb der Mittenbohrung erstreckt.

Bei einer weiteren bevorzugten Verfahrensweise liegt das Markerelement als Schicht vor, die in der Ausnehmung des Füllstabs aufgebracht ist .

In den Hohlzylinder werden in üblicher Weise zwei oder mehr, beispielsweise vier bis sieben zusätzliche Längsbohrungen (Kernstab-Bohrungen) eingebracht, deren Längsachsen parallel zur Längsachse der Mittenbohrung verlaufen. Die Kernstab-Bohrungen sind Durchgangsbohrungen oder Sacklochbohrungen und dienen zur Aufnahme von jeweils mindestens einem Kernstab aus dem Kernglas. Die Zusammensetzung des Kernglases ist in radialer Richtung gesehen gleichbleibend homogen oder sie ändert sich graduell oder stufenweise. Sie unterscheidet sich von der des Mantelglases so, dass eine Lichtführung im Kernglasbereich gewährleistet wird.

Die gewünschte Anzahl an Kernstab-Bohrungen wird entweder in einem Arbeitsgang erzeugt und jeweils mit mindestens einem Kernstab belegt. Oder es wird vorab nur eine Kernstab-Bohrung oder nur ein erster Anteil der gewünschten Anzahl an Kernstab-Bohrungen erzeugt, diese jeweils mit mindestens einem Kernstab belegt, und die mit den Kernstäben belegten Kernstab-Bohrungen werden kollabiert (dieser Umformprozess wird hier auch als "Konsolidierung" bezeichnet), bevor in einem zweiten oder weiteren Arbeitsgang der restliche Anteil oder ein weiterer Anteil der Kernstab-Bohrungen erzeugt wird, und auch dieser Anteil jeweils mit mindestens einem Kernstab belegt und gegebenenfalls kollabiert wird. Im einfachsten Fall haben alle Kernstäbe die gleichen Abmessungen und bestehen aus dem gleichen Kernglas. Die Kernstäbe können sich aber auch in ihren Abmessungen und/oder in der Zusammensetzung des jeweiligen Kernglases unterscheiden.

Das Befüllen der Mittenbohrung mit dem Füllstab inklusive des Markerelements kann erfolgen bevor oder nachdem alle Kernstab-Bohrungen erzeugt und/oder gefüllt worden sind, oder es kann erfolgen bevor oder nachdem ein Teil der Kernstab-Bohrungen erzeugt und/oder gefüllt worden sind. Bei einer bevorzugten Verfahrensweise wird die Mittenbohrung mit dem Füllstab und dem Markerelement befüllt, anschließend wird die befüllte Mittenbohrung durch Erhitzen kollabiert, und erst danach werden die gewünschten Kernstab-Bohrungen erzeugt. Bei einer anderen bevorzugten Verfahrensweise wird ein erster Anteil der gewünschten Anzahl der Kernstab-Bohrungen erzeugt und mit mindestens einem Kernstab bestückt, die Mittenbohrung wird mit dem Füllstab und dem Markerelement befüllt, anschließend werden die befüllten Kernstab-Bohrungen und die befüllte Mittenbohrung durch Erhitzen konsolidiert, und erst danach werden ein zweiter Anteil der Kernstab-Bohrungen erzeugt.

Das so hergestellte Bauteil-Ensemble wird umgeformt und dabei entweder direkt zu der Mehrkernfaser gezogen oder es wird zu einer Vorform für die Mehrkernfaser konsolidiert, wobei das Konsolidieren mit einem gleichzeitigen Elongieren einhergehen kann. Die so erzeugte "konsolidierte Vorform" wird gegebenenfalls zu der Mehrkernfaser gezogen oder sie wird zu einer "sekundären Vorform" weiterverarbeitet. Die Weiterverarbeitung zur "sekundären Vorform" umfasst beispielsweise das Erzeugen weiterer Bohrungen im Mantelglasbereich und deren Belegung mit Kernglas oder mit anderen Gläsern oder die einmalige oder wiederholte Durchführung von einem oder mehreren der folgenden Heißformprozesse: Aufkollabieren von zusätzlichem Mantelmaterial, Kollabieren, Elongieren, Kollabieren und gleichzeitiges Elongieren. Aus der durch die Weiterverarbeitung erzeugten sekundären Vorform wird die Mehrkernfaser gezogen.

Bei einer bevorzugten Verfahrensweise umfasst die Herstellung des Bauteil-Ensembles folgende Verfahrensschritte:
(a) Bereitstellen des Hohlzylinders, der das Mantelglas enthält,
(b) Bereitstellen mehrerer Kernstäbe, die das Kernglas enthalten,
(c) Bereitstellen eines Füllstabs, der eine Füllstab-Längsachse aufweist und der das Glas-Füllmaterial enthält,
(d) Erzeugen der mindestens einen Ausnehmung an der Außenmantelfläche des Füllstabs,
(e) Bereitstellen des Markerelements,
(f) Anordnen und Einschmelzen des Markerelements in die Ausnehmung,
(g) Erzeugen von Kernstab-Bohrungen, die sich entlang der Hohlzylinder-Längsachse erstrecken,
(h) Einbringen des Füllstabs und des Markerelements in die Mittenbohrung, und
(i) Einbringen der Kernstäbe in die Kernstab-Bohrungen unter Bildung des Bauteil-Ensembles.

Das so erzeugte Bauteil-Ensemble umfasst den Hohlzylinder, mindestens einen modifizierten Füllstab, der mit mindestens einem Markerelement verschmolzen ist und Kernstäbe. Die Listenzeichen (a) bis (i) geben lediglich eine bevorzugte aber keine obligatorische Reihenfolge der Verfahrensschritte vor. Als Kernstäbe des Bauteil-Ensemble werden hier auch solche Kernstäbe bezeichnet, wenn diese in ihrer jeweiligen Kernstab-Bohrung bereits eingeschmolzen sind.

Das Markerelement erstreckt sich entlang der Füllstab-Längsachse bevorzugt über dessen gesamte Länge, also vom ersten Füllstab-Ende bis zum zweiten Füllstab-Ende.

Durch das Verschmelzen mit dem Füllstab profitiert das Markerelement ganz besonders von dessen Geradheit und Ausrichtung; diese Eigenschaften werden quasi auf das Markerelement übertragen.

Das Markerelement ist beispielsweise ein Rohr und bevorzugt ein Stab. Bei einem Markerelement in Form eines Rohres kann die Rohrwandung ein Material enthalten, das eine höhere Viskosität aufweist als das Mantelglas, so dass beim Faserziehprozess die Bohrung nicht vollständig kollabiert und in der fertigen Mehrkernfaser als Hohlraum ("Airline") erhalten bleibt.

Die Querschnittsgeometrie, gegebenenfalls der Außendurchmesser und die Länge des Füllstabs sind an Geometrie und Länge der Hohlzylinder-Mittenbohrung angepasst. Die Mittenbohrung wird vorzugsweise unter Belassung eines umlaufenden Spalts mit einer Spaltweite von weniger als 2mm, besonders bevorzugt maximal 1mm, gefüllt. Beispielsweise liegt bei einer Mittenbohrung im Bereich von 38mm bis 78mm der Füllstab-Durchmesser im Bereich von 36mm bis 76mm.

Das Markerelement bildet einen luftgefüllten, langgestreckten Hohlraum (Kanal) oder es enthält ein Markermaterial, das sich vorzugsweise in mindestens einer physikalischen und/oder chemischen Eigenschaft vom Mantelglas, und vom Glas-Füllmaterial des Füllstabs unterscheidet, wobei die Eigenschaft vorzugsweise ausgewählt ist aus: Brechungsindex, Farbe, Fluoreszenz und/oder spezifischer Glasdichte.

Die Eigenschaft (beziehungsweise die Eigenschaften), die das Markerelement von den Gläsern des Bauteil-Ensembles unterscheidet, wirkt sich insbesondere auf die optischvisuelle Erscheinung des Markerelements aus und ist vorzugsweise mittels eines optischen Sensors erfassbar. Die Glaszusammensetzung eines Markerglases kann - so wie beispielsweise auch das Glas-Füllmaterial des Füllstabs - auf Quarzglas basieren. Durch Dotierung kann der Brechungsindex von Quarzglas verändert werden. So bewirkt beispielsweise die Dotierung eines Marker-Quarzglases mit Fluor eine Absenkung des Brechungsindex gegenüber undotiertem Quarzglas. Eine Einlagerung von Kohlenstoff in das Marker-Quarzglas kann zu einer Schwarzfärbung führen. Eine Dotierung des Marker-Quarzglases mit Titan bewirkt je nach Oxidationszustand eine Grau- oder Blaufärbung. Eine Dotierung des Marker-Quarzglases mit Seltenerdmetallen oder Germaniumoxid äußert sich in einer Fluoreszenz bei Dotierstoff-spezifischen Wellenlängen. Die spezifische Glasdichte des Markerelements ist durch Poren veränderbar und äußert sich in einer Verringerung der optischen Transparenz gegenüber blasenfreiem Glas.

Hinsichtlich des Halbzeugs zur Herstellung einer Mehrkernfaser wird die oben angegebene technische Aufgabe ausgehend von dem eingangs genannten Halbzeug erfindungsgemäß dadurch gelöst, dass der Füllstab eine sich in Richtung der Füllstab-Längsachse erstreckende Ausnehmung aufweist, in die ein Markerelement aus Markerglas eingesetzt ist oder die das Markerelement bildet, das sich entlang der Mittenbohrung-Längsachse und der Füllstab-Längsachse erstreckt.

Das erfindungsgemäße Halbzeug dient zur Herstellung einer Mehrkernfaser ohne zentralen Signalkern. Es umfasst einen Hohlzylinder, der einen Mantelglasbereich aus Mantelglas und mehrere mit einem Kernglas belegte Kernglasbereiche. Die Hohlzylinder-Mittenbohrung ist vollständig oder mindestens teilweise von einem Füllstab aus Glas-Füllmaterial belegt. Im oder am Füllstab ist mindestens eine sich in Richtung der Füllstab-Längsachse erstreckende Ausnehmung vorhanden, in die das Markerelement eingesetzt ist oder die das Markerelement bildet.

Die Mittenbohrung-Längsachse und die Füllstab-Längsachse verlaufen im Halbzeug koaxial zueinander.

Die Anzahl der Kernglasbereiche beträgt mindestens zwei, bevorzugt sind es vier bis sieben. Sie sind beispielsweise jeweils als parallel zur Hohlzylinder-Längsachse verlaufende Kernstab-Bohrungen im Mantelglasbereich des Hohlzylinders ausgeführt, und mit jeweils einem Kernstab besetzt. Der Füllstab ist in die Hohlzylinder-Mittenbohrung eingesetzt und füllt diese mindestens teilweise aus. In der Hohlzylinder-Mittenbohrung befindet sich außerdem mindestens ein Markerelement. Dieses ist mit dem Füllstab verbunden, indem es entweder als Ausnehmung im Füllstab ausgebildet ist oder indem es eine Ausnehmung im oder am Füllstab mindestens teilweise füllt. Der so gefüllte Füllstab wird hier auch als "modifizierter Füllstab" bezeichnet.. Der Füllstab enthält keinen für die Signalübertragung geeigneten Kernbereich.

Das Halbzeug bildet ein Bauteil-Ensemble wenn alle oder einige Kernstäbe, Füllstäbe und Markerelemente in ihren jeweiligen Bohrungen beziehungsweise Ausnehmungen lediglich eingesetzt, aber noch nicht darin verschmolzen sind. Das Halbzeug bildet eine Vorform (auch als "konsolidierte Vorform" bezeichnet), wenn alle Bohrungen beziehungsweise Ausnehmungen kollabiert und die Kernstäbe, Füllstäbe und Markerelemente untereinander oder mit dem Hohlzylinder verschmolzen sind.

Der Mantelglas-Hohlzylinder weist eine zentrale Mittenbohrung auf. Derartige Hohlzylinder werden beispielsweise kostengünstig anhand des OVD-Verfahrens erhalten, nachdem der Abscheidedorn entfernt worden ist. Die zentrale Mittenbohrung ist vollständig oder teilweise mittels eines Glas-Füllmaterials verschlossen, das von mehreren Füllstäbe oder vorzugsweise von einem einzigen Füllstab bereitgestellt wird.

Bei Ausführungsformen, bei denen die chemische Zusammensetzung des Glas-Füllstabs derjenigen des Mantelglases entspricht, bildet das Glas-Füllmaterial des Füllstab in der Mehrkernfaser einen Teil des optischen Mantels. Bei Ausführungsformen, bei denen sich die chemischen Zusammensetzungen von Glas-Füllstab und Mantelglas unterscheiden, kann dem Glas-Füllmaterial des Füllstabs in der Mehrkernfaser eine zusätzliche Funktion zufallen, beispielsweise kann es als "Stresszone" wirken, die in radialer Richtung wirkende Druck- oder Zugspannungen innerhalb der Faser erzeugt und/oder kompensiert.

Die zentrale Mittenbohrung wird dafür genutzt, um zusätzlich zum Füllstab ein Markerelement aus Markerglas aufzunehmen. Das Markerelement liegt im Halbzeug beispielsweise als langgestreckter Hohlraum oder als konsolidiertes oder nichtkonsolidiertes Bauteil aus einem Markermaterial oder als Beschichtung eines derartigen Bauteils mit dem Markermaterial vor und bildet in der Mehrkernfaser eine durchgängige, linienartige Markerzone aus dem Markermaterial oder einen luftgefüllten Hohlkanal.

Das Markerelement befindet sich im oder am Füllstab. Es befindet sich beispielsweise in Form von Luft oder einem anderen Gas in einer Ausnehmung, die als Hohlkanal ausgebildet ist, der sich durch den Füllstab entlang der Füllstab-Längsachse erstreckt, oder es ist in einer Ausnehmung am Außenmantel des Füllstabs angebracht.

Da sich das Markerelement im oder am Füllstab und damit innerhalb der Mittenbohrung des Mantelglas-Hohlzylinders aber nicht im Mantelglas des Hohlzylinders befindet, entfällt die Notwendigkeit dafür, den Mantelglas-Hohlzylinder zwecks Einfügung des Markerelements anzupassen, beispielsweise durch eine mechanische Bearbeitung und insbesondere durch Erzeugung einer separaten Bohrung für die Aufnahme des Markerelements im Mantelglas-Hohlzylinder. Das mit einer derartigen Anpassung des Mantelglas-Hohlzylinders einhergehende Beschädigungsrisiko entfällt somit.

Die Maßhaltigkeit und die Geradheit der Mittenbohrung können durch das OVD-Herstellungsverfahren selbst und - sofern erforderlich - durch nachfolgende Maßnahmen einfach gewährleistet werden. Zu den für die Einstellung von Maßhaltigkeit und Geradheit geeigneten nachfolgenden Maßnahmen gehören beispielsweise eine mechanische Nachbearbeitung der Mittenbohrung und/oder ein Elongierprozess, dem der im OVD-Abscheideprozess erzeugte Ausgangs-Hohlzylinder unterzogen wird, um daraus einen Rohrstrang zu elongieren, aus dem der Mantelglas-Hohlzylinder erzeugt wird oder aus dem mehrere Mantelglas-Hohlzylinder abgelängt werden. Der Elongierprozess erfolgt vorzugsweise ohne Einsatz eines Formwerkzeugs, das am abgezogenen Rohrstrangs angreift, um Beschädigungen der Rohrstrang-Oberfläche zu vermeiden. Ebenso können die Maßhaltigkeit und die Geradheit des passgenau in die Mittenbohrung einzusetzenden Füllstabs durch mechanische Bearbeitung und/oder mittels eines derartigen Elongierprozesses vergleichsweise einfach gewährleistet werden. Diese mechanische Bearbeitung kann gegebenenfalls ein Außenbearbeitungsverfahren sein, was in der Regel deutlich weniger aufwändig ist als ein Innenbearbeitungsverfahren.

Eine achsenparallele Ausrichtung des Markerelements wird erleichtert, indem es von der Ausnehmung des Füllstabs gebildet wird, die sich in Richtung der Füllstab-Längsachse erstreckt, oder indem es in die sich in Richtung der Füllstab-Längsachse erstreckende Ausnehmung eingesetzt wird.

Die Ausnehmung ist beispielsweise als Bohrung im Füllstab und vorzugsweise als Längsrille (Längsnut) an der Außenmantelfläche des Füllstabs ausgeführt. Die rillenförmige Ausnehmung ist - unter Ausbildung eines "modifizierten Füllstabs" - beispielsweise mit einem zylinderförmigen Bauteil aus einem Markermaterial oder mit einem partikelförmigen Markermaterial gefüllt. Das partikelförmige Markermaterial kann durch thermische Verdichtung oder durch Hinzufügen von Bindemittel eine gewisse Formstabilität haben. Das Markermaterial füllt die Ausnehmung vollständig oder teilweise aus. Dabei gewährleistet die Ausnehmung einen Formschluss zwischen Markerelement und Füllstab. Markerelement und Füllstab können auch vorab (das heißt: vor dem Einbringen in die Mittenbohrung) durch Stoffschluss miteinander verbunden werden, beispielsweise durch Zusammensintern oder Verschmelzen.

Besonders bevorzugt ist in dem Zusammenhang eine Ausführungsform, bei der die Ausnehmung des Füllstabs als Längsrille ausgeführt ist. Denn zum einen ist eine Längsrille in der Füllstab-Außenmantelfläche im Vergleich zu einer Bohrung im Füllstab besonders einfach und geometrisch exakt zu fertigen. Zum anderen ist die so erzeugte Längsrille genauso so exakt und gerade wie der Füllstab selbst. Und darüber hinaus können die Tiefe beziehungsweise die Öffnungsweite der Längsrille fast beliebig klein gehalten werden, beispielsweise beides weniger als 15mm, vorzugsweise weniger als 10mm und besonders bevorzugt weniger als 5mm. Somit sind geometrisch exakte Markerelemente mit geringem Volumen verfügbar, die in der Vorform beziehungsweise im Bauteil-Ensemble eine Abweichung ihrer axialen Ausrichtung von weniger als 0,3mm/m haben und die demgemäß in der Mehrkernfaser entsprechend kleine und hochgenaue Markerzonen ausbilden.

Das Markermaterial liegt beispielsweise in Form eines zylinderförmigen Bauteils (Stab oder Rohr) aus dem Markermaterial vor, oder es wird von einer Schüttung von Teilchen aus dem Markermaterial oder durch Innenbeschichtung der Längsrille mit dem Markermaterial gebildet. Das zylinderförmige Bauteil aus dem Markermaterial beziehungsweise die Schüttung aus dem Markermaterial können in der Längsrille zusätzlich durch Verschmelzen fixiert sein.

Die vergleichsweise einfach zu erreichende Geradheit von Füllstab und Mittenbohrung erleichtern auch die achsenparallele Ausrichtung des Markerelements. Dies gilt insbesondere für eine besonders bevorzugte Ausführungsform des Halbzeugs, bei der das Markerelement sich entlang der Füllstab-Längsachse erstreckt und in die Ausnehmung eingeschmolzen ist.

Dabei ist das Markerelement (Bauteil, Schüttung, Schicht) in der Ausnehmung durch Verschmelzen fixiert. Dazu wird es über mindestens einen Teil seiner Länge, vorzugsweise lokal an mehreren über seine Länge verteilten Stellen und idealerweise über seine gesamte Länge in die Ausnehmung eingeschmolzen. Resultat ist ein mit dem Markerelement-Material gefüllter, modifizierter Füllstab.

Durch das Einschmelzen des Markerelements in die Ausnehmung kann gewährleistet werden, dass die Seitenränder der mit dem eingeschmolzenen Markerelement gefüllten Ausnehmung weitgehend stufenlose, kontinuierliche Übergänge zur Außenmantelfläche des Füllstabs bilden und so strukturelle Störstellen beim Faserziehprozess vermieden werden. Dies wirkt sich positiv auf die Maßhaltigkeit der Mehrkernfaser aus. Das Markerelement füllt beispielsweise die Ausnehmung vollständig aus und hat idealerweise eine an die Außenkontur der Füllstab-Außenmantelfläche angepasste Wölbung.

Somit ist bei einer bevorzugten Ausführungsform vorgesehen, dass das Markerelement eine Länge hat und dass es entlang mindestens 80% dieser Länge, vorzugsweise entlang mindestens 90% dieser Länge vollständig, streckenweise oder punktuell in die Ausnehmung eingeschmolzen ist.

Das in der Ausnehmung eingeschmolzene Markerelement ist in Bezug auf den Füllstab fixiert, was dessen Handhabung im weiteren Faserfertigungsprozess vereinfacht. Beim Einschmelzen kann infolge der Oberflächenspannung eine gewisse Abrundung des Markermaterials und damit eine Anpassung an die Kontur der Außenmantelfläche des Füllstabs erreicht werden. Nach dem Einschmelzen des Markerelements können Fehlerfreiheit und Qualität der Einschmelzung kontrolliert und sofern erforderlich verbessert werden.

Somit ist das Halbzeug mit einem Markerelement ausgestattet, für das keine separate Bohrung im Mantelglas-Hohlzylinder - verbunden mit den oben erläuterten Risiken und Schwierigkeiten - erzeugt werden musste. Gleichzeitig kann trotz hohem Aspektverhältnis eine hohe Genauigkeit gewährleistet werden, die sich beispielsweise im Halbzeug darin manifestiert, dass die Achsenparallelität des Markerelements eine Abweichung von weniger als 0,3mm/m hat.

Bei einer bevorzugten Ausführungsform umfasst die Ausnehmung eine Bohrung und/oder eine Längsrille in der Außenmantelfläche des Füllstabs, wobei das erfindungsgemäße Halbzeug weiterhin umfasst: den die Mittenbohrung aufweisenden Hohlzylinder, mindestens zwei Kernstäbe, die das Kernglas enthalten und die Kernglasbereiche bilden, den in der Mittenbohrung angeordneten Füllstab und mindestens ein in der Ausnehmung des Füllstabs angebrachtes Markerelement.

Das Markerelement liegt beispielsweise als Stab vor, der sich parallel zu einem Füllstab oder zu mehreren Füllstäben innerhalb der Mittenbohrung erstreckt. Markerelement-Stab und Füllstäbe können gegebenenfalls auch in konsolidierter, also mit ihrer Umgebung verschmolzener Form vorliegen.

In den Hohlzylinder sind zwei oder mehr, beispielsweise vier bis sieben zusätzliche Längsbohrungen (Kernstab-Bohrungen) eingebracht, deren Längsachsen parallel zur Längsachse der Mittenbohrung verlaufen. Die Kernstab-Bohrungen sind Durchgangsbohrungen oder Sacklochbohrungen und dienen zur Aufnahme von jeweils mindestens einem Kernstab aus dem Kernglas. Die Zusammensetzung des Kernglases ist in radialer Richtung gesehen gleichbleibend homogen oder sie ändert sich graduell oder stufenweise. Sie unterscheidet sich von der des Mantelglases so, dass eine Lichtführung im Kernglasbereich gewährleistet wird. Im einfachsten Fall haben alle Kernstäbe die gleichen Abmessungen und bestehen aus dem gleichen Kernglas. Die Kernstäbe können sich aber auch in ihren Abmessungen und/oder in der Zusammensetzung des jeweiligen Kernglases unterscheiden.

Das Halbzeug wird entweder direkt zu der Mehrkernfaser gezogen oder es wird zu einer Vorform für die Mehrkernfaser konsolidiert, wobei das Konsolidieren mit einem gleichzeitigen Elongieren einhergehen kann. Die so erzeugte "konsolidierte Vorform" wird gegebenenfalls zu der Mehrkernfaser gezogen oder sie wird zu einer "sekundären Vorform" weiterverarbeitet, aus der dann abschließend die MFK gezogen wird.

Das Markerelement erstreckt sich entlang der Füllstab-Längsachse bevorzugt über dessen gesamte Länge, also vom ersten Füllstab-Ende bis zum zweiten Füllstab-Ende, und es ist vorzugsweise an dem Füllstab angebracht.

Durch das Anbringen am Füllstab profitiert das Markerelement von dessen Geradheit und Ausrichtung; diese Eigenschaften werden quasi auf das Markerelement übertragen. Das Anbringen beruht beispielsweise auf Reibschluss, Stoffschluss und/oder Formschluss zwischen Füllstab und Markerelement.

Das Markerelement ist vorzugsweise in Form eines zylinderförmigen Bauteils aus einem Markermaterial oder in Form einer mit dem Füllstab verbundenen Schicht oder Masse aus dem Markermaterial ausgebildet. Das mindestens eine zylinderförmige Bauteil ist beispielsweise ein Rohr und bevorzugt ein Stab. Bei einem Markerelement in Form eines Rohres kann die Rohrwandung ein Material enthalten, das eine höhere Viskosität aufweist als das Mantelglas, so dass beim Faserziehprozess die Bohrung nicht vollständig kollabiert und in der fertigen Mehrkernfaser als Hohlraum ("Airline") erhalten bleibt.

Die Querschnittsgeometrie, gegebenenfalls der Außendurchmesser und die Länge des Füllstabs sind an Geometrie und Länge der Hohlzylinder-Mittenbohrung angepasst. Die Mittenbohrung wird vorzugsweise unter Belassung eines umlaufenden Spalts mit einer Spaltweite von weniger als 2mm, besonders bevorzugt maximal 1mm, gefüllt. Beispielsweise liegt bei einer Mittenbohrung im Bereich von 38mm bis 78mm der Füllstab-Durchmesser im Bereich von 36mm bis 76mm.

Das Markerelement bildet einen luftgefüllten, langgestreckten Hohlraum oder Kanal oder es enthält ein Markermaterial, das sich vorzugsweise in mindestens einer physikalischen und/oder chemischen Eigenschaft vom Mantelglas und vom Glas-Füllmaterial des Füllstabs unterscheidet, wobei die Eigenschaft ausgewählt ist aus: Brechungsindex, Farbe, Fluoreszenz und/oder spezifischer Glasdichte.

Die Eigenschaft (beziehungsweise die Eigenschaften), die das Markerelement von den Gläsern des Bauteil-Ensembles unterscheidet, wirkt sich insbesondere auf die optischvisuelle Erscheinung des Markerelements aus und ist vorzugsweise mittels eines optischen Sensors erfassbar. Die Glaszusammensetzung des eines Markerglases kann - so wie beispielsweise auch das Glas-Füllmaterial - auf Quarzglas basieren. Durch Dotierung kann der Brechungsindex von Quarzglas verändert werden. So bewirkt beispielsweise die Dotierung des Marker-Quarzglases mit Fluor eine Absenkung des Brechungsindex gegenüber undotiertem Quarzglas. Eine Einlagerung von Kohlenstoff in das Marker-Quarzglas kann zu einer Schwarzfärbung führen. Eine Dotierung des Marker-Quarzglases mit Titan bewirkt je nach Oxidationszustand eine Grau- oder Blaufärbung. Eine Dotierung des Marker-Quarzglases mit Seltenerdmetallen oder Germaniumoxid äußert sich in einer Fluoreszenz bei Dotierstoff-spezifischen Wellenlängen. Die spezifische Glasdichte des Markerelements ist durch Poren veränderbar und äußert sich in einer Verringerung der optischen Transparenz gegenüber blasenfreiem Glas.

Anhand des erfindungsgemäßen Verfahrens beziehungsweise unter Einsatz des erfindungsgemäßen Halbzeugs wird eine Mehrkernfaser erhalten, bei der die Signalkerne außerhalb eines Hüllkreises um die Faser-Mittelachse und die Markerzone innerhalb des Hüllkreises um die Faser-Mittelachse angeordnet sind.

Der Typ der Mehrkernfaser entspricht dem der "Mehrkernfaser ohne zentralen Signalkern". Alle Signalkerne sind außerhalb der Faser-Mittelachse und vollständig außerhalb eines Hüllkreises um die Faser-Mittelachse angeordnet.

Die Mehrkernfaser ist von mindestens einer durchgängigen, linienartigen Markerzone durchzogen. Die Markerzone dient zur Symmetriebrechung sowie dazu, die Signalkerne sowie deren Positionen zueinander und in Bezug auf die Faser-Mittelachse eindeutig zu identifizieren.

Im Faser-Querschnitt gesehen liegt die - vorzugsweise einzige - Markerzone innerhalb des genannten, von den Signalkernen definierten Hüllkreises, und damit in einem Bereich zwischen den Signalkernen (und nicht: außerhalb der Signalkerne), der auch die Faser-Mittelachse umfasst. Es hat sich überraschend gezeigt, dass der Mehrkernfaser bei dieser Positionierung der Markerzone beim Faserziehprozess ein vergleichsweise geringes Faser-Curl aufgeprägt wird. Ohne auf diese Theorie festgelegt sein zu wollen, kann vermutet werden, dass die Positionierung der Markerzone im Innenbereich des Faserquerschnitts weniger Einfluss auf die Symmetrie des Faserdesigns ausübt als eine Positionierung im Außenbereich. Offenbar werden dadurch beim Faserziehprozess geringere radial wirkende Kräfte in der Mehrkernfaser erzeugt.

### Definitionen und Messmethoden

Einzelne Begriffe der obigen Beschreibung werden im Folgenden ergänzend definiert. Die Definitionen sind Bestandteil der Beschreibung der Erfindung. Für Begriffe und Messverfahren, die in der Beschreibung nicht speziell definiert sind, ist die Auslegung gemäß der Internationalen Fernmeldeunion (ITU; International Telecommunication Union) maßgeblich. Bei einem Widerspruch zwischen einer der folgenden Definitionen und der übrigen Beschreibung ist das in der übrigen Beschreibung Gesagte maßgeblich.

### Mantelglas-Hohlzylinder / Mantelglasbereich

Der Hohlzylinder enthält ein Mantelglas. Das Mantelglas bildet einen Mantelglasbereich mit zentraler Mittenbohrung, außerhalb von der die zur Signalübertragung ausgelegten Kernglasbereiche erzeugt werden. Das Mantelglas besteht beispielsweise aus undotiertem Quarzglas oder es enthält mindestens einen den Brechungsindex von Quarzglas absenkenden Dotierstoff. Fluor und Bor sind Dotierstoffe, die den Brechungsindex von Quarzglas absenken können. Der Mantelglas-Hohlzylinder ist langgestreckt und hat im Wesentlichen Zylinderform. Im Bereich der stirnseitigen Enden können Abweichungen von der Zylinderform vorhanden sein. Der Mantelglas-Zylinder wird vorzugsweise anhand des OVD-Verfahrens hergestellt.

### Kernstäbe / Kernglasbereich

Die Kernstäbe enthalten ein Kernglas, das in radialer Richtung einen homogenen oder einen nicht-homogenen Brechungsindex-Verlauf aufweist. Das Kernglas von jedem der Kernstäbe bildet einen Kernglasbereich. Die Kernstäbe können einen Bereich aus einem Kernglas mit einem vergleichsweise hohen Brechungsindex und mindestens einen weiteren Bereich aus einem anderen Glas mit einem vergleichsweise niedrigen Brechungsindex enthalten; beispielsweise ein Quarzglas, das mit Fluor und/oder Chlor dotiert ist. Das Glas mit dem höchsten Brechungsindex befindet sich in der Regel in der zentralen Achse des Kernstabs. Es besteht beispielsweise aus Quarzglas, dem mindestens ein Dotierstoff zur Erhöhung des Brechungsindex zugesetzt ist. In der Mehrkernfaser bildet der Kernstab mindestens einen Signalkern aus, in dem das zu übertragende Signal hauptsächlich transportiert wird. Der Signalkern kann an andere Glasbereiche mit kleinerem Brechungsindex angrenzen, die ebenfalls vom Kernstab bereitgestellt worden sind.

### Füllstab / modifizierter Füllstab

Der Füllstab enthält ein Glas-Füllmaterial. Der Füllstab bildet in der Mehrkernfaser keinen für die Signalübertragung nutzbaren Signalkern. Die Zusammensetzung des Glas-Füllmaterials entspricht im einfachsten Fall dem des Mantelglases. Die Zusammensetzung kann aber auch von des Mantelglases abweichen, um der Mehrkernfaser eine zusätzliche Eigenschaft aufzuprägen. Beispielsweise kann es einen geringeren thermischen Ausdehnungskoeffizienten als das Mantelglas aufweisen.

Der modifizierte Füllstab ist mit einem Markerelement verbunden und bildet mit diesem eine handhabbare Einheit. Er enthält Glas-Füllmaterial und Markermaterial.

### Markerelement / Markermaterial / Markerglas

Das Markerelement enthält ein Markermaterial oder es besteht zum Teil aus Luft oder einem anderen Gas. Insbesondere enthält das Markerelement mindestens ein Markerglas. Die chemische Zusammensetzung des Markermaterials unterscheidet sich von der des Mantelglases und des Glas-Füllmaterials des Füllstabs und/oder die Dichte des Markermaterials unterscheidet sich von der des Mantelglases und des Glas-Füllmaterials. Das Markerelement liegt in der Vorform und im Bauteil-Ensemble als Bauteil oder als Schicht oder Masse auf einem Bauteil vor und bildet in der Mehrkernfaser eine optisch detektierbare Markerzone.

### Bauteil-Ensemble / konsolidierte Vorform / sekundäre Vorform / Halbzeug

Das "Bauteil-Ensemble" umfasst den Mantelglas-Hohlzylinder mit darin eingesetzten Kernstäben, den mindestens einen Füllstab und das mindestens eine Markerelement. Durch Fixieren der Kernstäbe in den Kernstab-Bohrungen; beispielsweise durch Verengung eines Mantelglas-Hohlzylinder-Endes oder durch Kollabieren und Verschmelzen, wird eine "Vorform" erhalten, die hier auch als "konsolidierte Vorform" bezeichnet wird. Das Bauteil-Ensemble oder die (konsolidierte) Vorform werden zu einer "sekundären Vorform" oder direkt zu der Mehrkernfaser elongiert. Unter dem Begriff "Halbzeug" werden hier das Bauteil-Ensemble, die konsolidierte Vorform und die sekundäre Vorform subsumiert. Das Umformen des Bauteil-Ensembles umfasst das Elongieren zur Mehrkernfaser oder das Bilden der konsolidierten Vorform.

### Quarzglas

Quarzglas ist beispielsweise aus natürlich vorkommendem SiO₂-Rohstoff erschmolzen (natürliches Quarzglas), oder es ist synthetisch erzeugt (synthetisches Quarzglas) oder es besteht aus Mischungen dieser Quarzglassorten. Synthetisches, transparentes Quarzglas wird beispielsweise durch Flammenhydrolyse oder Oxidation synthetisch erzeugter Siliziumverbindungen, durch Polykondensation organischer Siliziumverbindungen nach dem so genannten Sol-Gel-Verfahren oder durch Hydrolyse und Fällung anorganischer Siliziumverbindungen in einer Flüssigkeit erhalten.

### Verschmelzen

Im Zusammenhang mit Bauteilen aus Glas ist unter Verschmelzen zu verstehen, dass die Bauteile an einer Kontaktfläche miteinander verschmolzen sind. Das Verschmelzen erfolgt durch Aufheizen der Bauteile mindestens im Bereich der Kontaktfläche mittels einer Heizquelle, wie einem Ofen, einem Brenner oder einem Laser.

### Positionsangaben: oben / unten

Die Angaben beziehen sich auf Positionen beim Elongierprozess beziehungsweise beim Faserziehprozess. "Unten" bezeichnet die Position in Ziehrichtung, "Oben" die Position entgegen der Ziehrichtung.

### Querschnitt

Den Schnitt senkrecht zur Längsrichtung/Längsachse.

### Längsschnitt

Einen Schnitt parallel zur Längsrichtung/Längsachse.

### Bohrung

Die Begriffe "Bohrung", "Mittenbohrung", "Innenbohrung" oder "Längsbohrung" bezeichnen Löcher mit zylinderförmiger aber ansonsten beliebiger Innengeometrie. Sie werden beispielsweise durch einen Bohrvorgang erzeugt oder sie entstehen, indem durch einen Abscheideprozess oder einen Pressvorgang auf der Außenmantelfläche eines Dorns eine Materialschicht abgelagert wird und der Dorn anschließend entnommen wird.

### Achsenparallele Ausrichtung / Achsenparallelität

Bezugsachse ist jeweils die Längsachse des Mantelglas-Hohlzylinders beziehungsweise die Mittelachse der Mehrkernfaser.

### Ausführungsbeispiel

Nachfolgend wird die Erfindung anhand eines Ausführungsbeispiels und einer Zeichnung näher erläutert. Im Einzelnen zeigt in schematischer Darstellung
- **Figur 1**: einen Querschnitt eines Mantelglas-Hohlzylinders mit einer Mittelbohrung sowie Durchgangsbohrungen für die Aufnahme von Kernstäben,
- **Figur 2**: Bearbeitungsschritte (a) bis (d) für die Herstellung eines Füllstabs mit Markerelement zum Einsetzen in die Mittenbohrung des Mantelglas-Hohlzylinders von Figur 1,
- **Figur 3**: das Bauteil-Ensemble aus Mantelglas-Hohlzylinder und eingesetztem Füllstab inklusive Markerelement,
- **Figur 4**: einen Querschnitt einer konsolidierten Vorform aus Mantelglas-Hohlzylinder, eingesetztem Füllstab inklusive Markerelement und in die Durchgangsbohrungen eingesetzten Kernstäben und
- **Figur 5**: einen Querschnitt einer aus der Vorform von Figur 4 gezogenen Mehrkernfaser.

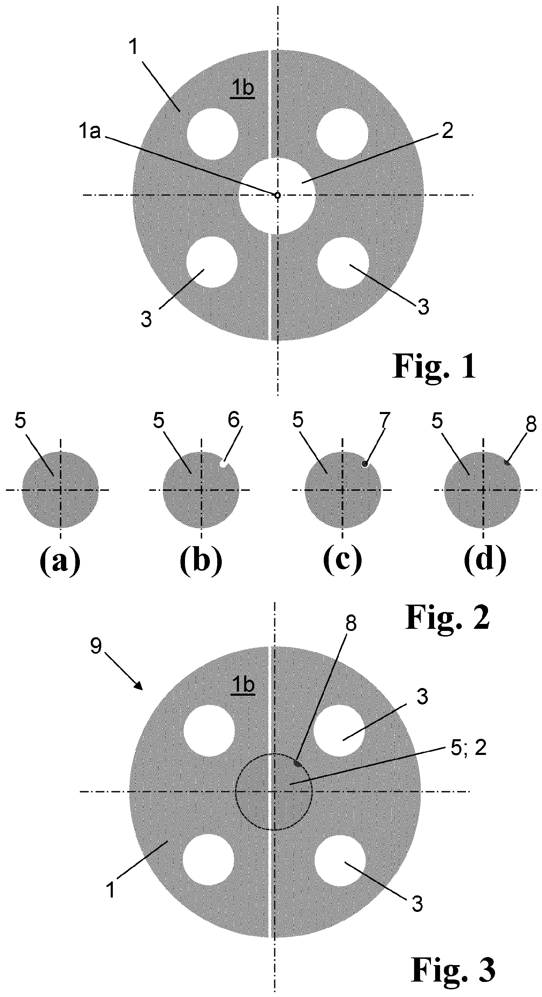

**Figur 1** zeigt schematisch einen Querschnitt eines Hohlzylinders 1 aus einem Mantelglas, der als Basiskörper für die Herstellung einer Mehrkernfaser dient.

Der Hohlzylinder 1 wird in bekannter Weise anhand der OVD-Methode hergestellt. Bei diesem Verfahren werden SiO₂-Sootpartikel gebildet, indem ein hochreines SiO₂-Ausgangsmaterial, beispielsweise Siliciumtetrachlorid, durch einen Abscheidebrenner geleitet und einer Brennerflamme zugeführt wird, in der es zu festem SiO₂ oxidiert wird. Dieses wird in Form feiner SiO₂-Sootpartikel auf der Außenmantelfläche eines um seine Längsachse rotierenden, zylinderförmigen Abscheidedorns aus der Gasphase abgeschieden, wobei der Abscheidebrenner eine reversierende Hin- und Herbewegung entlang der Abscheidedorn-Längsachse ausführt. Auf der Außenmantelfläche des Abscheidedorns bildet sich ein SiO₂-Sootkörper. Nach Abschluss des Abscheideprozesses wird der Abscheidedorn entfernt, so dass eine Innenbohrung 2 zurückbleibt. Der SiO₂-Sootkörper wird anschließend in einem Ofen unter Vakuum verglast.

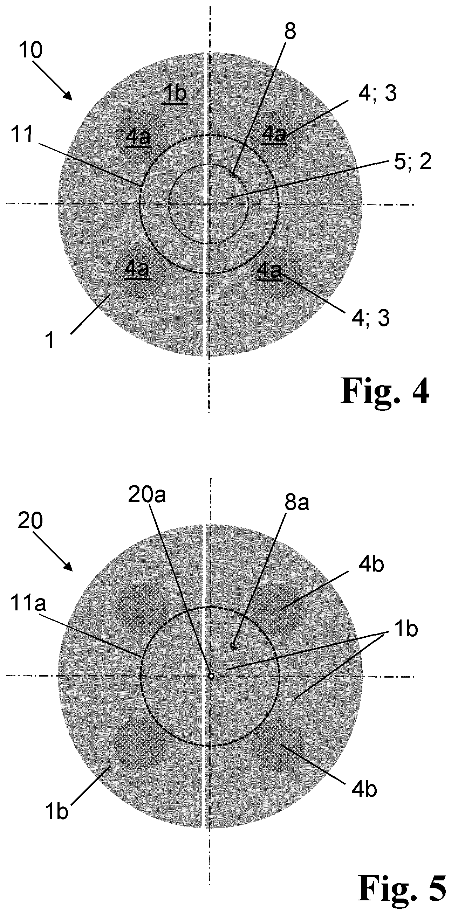

Der so erhaltene Hohlzylinder 1 besteht aus nicht dotiertem, synthetisch erzeugtem Quarzglas, das den Mantelglasbereich 1b bildet. Der Hohlzylinder hat eine Länge von 1500mm und wird durch Rundschleifen auf einen nominalen Außendurchmesser von 200mm und durch Bohren und Honen auf einen Innendurchmesser von 42mm eingestellt. Vier Bohrungen 3 werden in einer vorbestimmten (hier quadratischen) Konfiguration durch mechanisches Bohren in Richtung der Hohlzylinder-Längsachse 1a erzeugt, die in der Darstellung von Figur 1 senkrecht zur Blattebene verläuft. Die Bohrungen 3 dienen zur Aufnahme von Kernstäben (Figur 4) und haben einen Durchmesser von 30mm. Die Bohrungen erstrecken sich durch den gesamten Hohlzylinder 1 (Durchgangsbohrungen). Bei einer alternativen Ausführungsform sind die Bohrungen als Sacklochbohrungen ausgeführt.

**Figur 2** zeigt schematisch Verfahrensschritte zur Herstellung eines Füllstabs 5. Der in **Figur 2(a)** gezeigte Füllstab 5 besteht vorzugsweise aus dem gleichen Glas wie der Hohlzylinder 1, also aus undotiertem Quarzglas. Für seine Herstellung sind die bekannten Methoden geeignet, wie beispielsweise VAD-Verfahren (Vapor Phase Axial Deposition), OVD-Verfahren (Outside Vapor Deposition) oder MCVD-Verfahren (Modified Chemical Vapor Deposition). Er dient zur Füllung der Hohlzylinder-Innenbohrung 2 und hat eine Länge von etwa 1500mm und einen anfänglichen Außendurchmesser von etwa 45mm, der durch Rundschleifen auf etwa 40mm reduziert wird. Durch das Rundschleifen werden etwaige Störungen der Außenmantelfläche 5b und Biegungen beseitigt. Alternativ oder ergänzend wird die Durchmesseranpassung und Oberflächenverbesserung durch Elongieren in einem werkzeugfreien Elongierprozess erreicht. Die Füllstab-Längsachse 5a verläuft in dieser Darstellung ebenfalls senkrecht zur Blattebene.

**Figur 2(b)** zeigt, dass in die Außenmantelfläche des Füllstabes 5 eine Längsnut 6 eingefräst worden ist. Die Längsnut 6 erstreckt sich über die gesamte Länge des Füllstabes 5. Sie hat U-Form mit einem abgerundeten Boden und geraden Seitenwänden. Ihre Öffnungsweite und die Tiefe betragen jeweils 6mm. Aus der Längsnut (6) kann in einem nachfolgenden Verfahrensschritt ein Hohlkanal erzeugt werden, der ein Markerelement im Sinne der Erfindung bildet. Dies wird weiter unten anhand von Figur 4 noch näher erläutert.

**Figur 2(c)** zeigt die Längsnut 6 mit einem darin eingelegten Markerstab 7. Der Markerstab 7 hat einen Durchmesser von 5mm. Es besteht aus synthetisch erzeugtem Quarzglas, das mit Fluor dotiert ist und im Handel unter der Bezeichnung F320 erhältlich ist. Sowohl die Viskosität als auch der Brechungsindex des Fluor-dotierten Quarzglases des Markerstabs 7 sind kleiner als beim undotierten Quarzglas, aus dem der Hohlzylinder 1 und der Füllstab 5 bestehen. Der Markerstab 7 wird erhalten, indem ein Ausgangszylinder aus dem F320-Quarzglas in einem werkzeugfreien Verfahren elongiert wird. Er hat eine glatte und im Schmelzfluss erzeugte Oberfläche und zeichnet sich durch eine hohe Maßhaltigkeit aus, so dass er sich ohne Schwierigkeiten und passgenau in die enge Längsnut 6 einlegen lässt.

Anschließend werden der Füllstab 5 und der Markerstab 7 miteinander verschmolzen. Dabei wird der Füllstab 5 mit horizontal orientierter Längsachse 5a so gelagert, dass sich die Längsnut 6 an seiner Oberseite befindet. Der in die Längsnut 6 eingelegte Markerstab 7 wird zunächst punktuell mittels eines Brenners erhitzt, so dass er an drei etwa gleichmäßig verteilten Fixierungspunkten, die sich an den Enden und in der Mitte des Markerstabes 7 befinden und die über 95% seiner Länge verteilt sind, in der Längsnut fixiert wird. Anschließend wird er mittels des Brenners gleichmäßig erhitzt, bis sich das Fluor-dotierte Quarzglas infolge seiner vergleichsweise geringen Viskosität erweicht und verformt, so dass es in die Längsnut 6 einsinkt und diese auffüllt. Die an die freie Atmosphäre angrenzende Oberfläche des erweichten Glasmasse zeigt infolge der Oberflächenspannung eine gewisse Aufwölbung, so dass eine ausgeprägte Stufe zwischen den seitlichen Rändern der Längsnut 6 und der Außenmantelfläche 5b des Füllstabs 5 vermeiden wird.

**Figur 2(d)** zeigt die Markerglasmasse 8 nach dem Erweichen, Verformen und dem Verschmelzen mit dem ehemaligen Füllstab 5 sowie den daraus resultierenden, mit Markerglasmasse 8 gefüllten, modifizierten Füllstab 5c. Das Glasvolumen des ehemaligen Markerstabs 7 ist auf das Innenvorlumen der Längsnut 6 so abgestimmt, dass die Markerglasmasse 8 die Längsnut 6 gerade vollständig ausfüllt.

Der so mit der Markerglasmasse 8 gefüllte, modifizierte Füllstab 5c wird in die Innenbohrung 2 des Hohlzylinders 1 eingesetzt. **Figur 3** zeigt schematisch das Bauteil-Ensemble 9 aus Hohlzylinder 1, und modifiziertem Füllstab 5c mit der Markerglasmasse 8.

Außerdem werden vier Kernstäbe 4 aus Germanium-dotiertem Quarzglas mit einer Länge von etwa 1500mm und einem Außendurchmesser von etwa 28mm hergestellt. Dafür sind ebenfalls bekannte Techniken geeignet, beispielsweise das MCVD-Verfahren (Modified Chemical Vapor Deposition).

Die Kernstäbe 4 werden in die Bohrungen 3 eingesetzt. Anschließend wird das Bauteil-Ensemble 9 aus Mantelglas-Hohlzylinder 1, modifiziertem Füllstab 5c und den Kernstäben 4 erhitzt, so dass sich die Innenbohrung 2 und die Ringspalte um die Kernstäbe 4 schließen und alle Bauteile des Ensembles 9 miteinander verschmolzen werden.

**Figur 4** zeigt schematisch, das so fixierte Bauteil-Ensemble aus Mantelglas-Hohlzylinder 1, modifiziertem Füllstab 5c und den Kernstäben 4, das die konsolidierte Vorform 10 bildet. Alle Kernstäbe 4 bilden voneinander separierte, kreisförmige Kernglasbereiche 4a, die sich vollständig außerhalb eines Hüllkreises 11 befinden, wohingegen sich das Markerelement 8 vollständig innerhalb dieses Hüllkreises 11 befindet.

Die konsolidierte Vorform 10 wird anschließend zu einer sekundären Vorform elongiert. Dabei wird die Vorform 10 in einer Elongier-Vorrichtung mittels eines Halters in vertikaler Ausrichtung der Hohlzylinder-Längsachse 1a gehalten. Die so erzeugte sekundäre Vorform wird abschließend in üblicher Weise in einer Ziehvorrichtung zu einer Mehrkernfaser 20 gezogen.

Das Markerelement 8 liegt bei diesem Ausführungsbeispiel als Markerglasmasse 8 vor, die durch Umformung des ursprünglichen Markerstabes 7 erzeugt worden ist. Bei einer alternativen Verfahrensweise ist die Längsrille 6 beim Konsolidieren des Bauteil-Ensembles 9 zur Vorform 10 ungefüllt (kein Stab oder Rohr ist eingelegt), und das vollständige Kollabieren der Längsrille 6 wird verhindert, indem in ihr ein Überdruck erzeugt und aufrechterhalten wird. Auf diese Weise wird ein Hohlraum erzeugt, der sich entlang der Längsachse 1a erstreckt, und der in der Mehrkernfaser als luftgefüllter Hohlkanal vorliegt. Der Hohlkanal kann als Markerzone dienen, da sich der Brechungsindex von Luft deutlich von dem des Mantelglases 1b unterscheidet.

**Figur 5** zeigt schematisch den Querschnitt der Mehrkernfaser 20. Dieser entspricht abgesehen von den kleineren radialen Abmessungen im Wesentlichen dem Querschnitt der konsolidierten Vorform 10. Die Kernglasbereiche (4a) der ehemaligen Kernstäbe (4) bilden Signalkerne 4b, die sich längs der Faser-Längsachse 20a erstrecken; der ehemalige Füllstab (5) ist Teil des Mantelglasbereichs 1b geworden und visuell davon nicht mehr zu unterscheiden, und das ehemalige Markerelement (8) bildet eine Markerzone 8a. Alle Signalkerne 4b befinden sich vollständig außerhalb des Hüllkreises 11a, wohingegen sich die Markerzone 8a vollständig innerhalb dieses Hüllkreises 11a befindet. Die Markerzone 8a zeichnet sich eine geringe Größe aus, so dass sie der Mehrkernfaser 20 beim Faserziehprozess eine geringe Spannung aufprägt und sich demzufolge ein geringes Faser-Curl einstellt.

## Patentansprüche

1. Verfahren zur Herstellung einer Mehrkernfaser (20), umfassend einen Verfahrensschritt, bei dem ein Bauteil-Ensemble (9) zu der Mehrkernfaser (20) oder zu einer Vorform (10) für die Mehrkernfaser (20) umgeformt wird, das einen eine Mittenbohrung (2) und eine Hohlzylinder-Längsachse (1a) aufweisenden Hohlzylinder (1) umfasst, der einen Mantelglasbereich (1b) aus Mantelglas und mehrere mit einem Kernglas belegte Kernglasbereiche (4a) aufweist, wobei mindestens ein Teil der Mittenbohrung (2) von einem Glas-Füllstab (5) belegt ist, der eine Füllstab-Längsachse (5a) und eine Füllstab-Außenmantelfläche (5b) aufweist, **dadurch gekennzeichnet, dass** im oder am Füllstab (5) eine sich in Richtung der Füllstab-Längsachse (2) erstreckende Ausnehmung (5) erzeugt wird, in die ein Markerelement (6; 7; 8) aus Markerglas eingesetzt wird oder die das Markerelement (6; 7; 8) bildet.

2. Verfahren nach Anspruch 1, **dadurch gekennzeichnet, dass** das Markerelement (6; 7; 8) sich entlang der Füllstab-Längsachse (5a) erstreckt und vor dem Umformen zur Vorform (10) beziehungsweise zur Mehrkernfaser (20) in die Ausnehmung (6) eingeschmolzen wird.

3. Verfahren nach Anspruch 1 oder 2, **dadurch gekennzeichnet, dass** das Markerelement (6; 7; 8) eine Länge hat und dass das Einschmelzen entlang mindestens 80% dieser Länge, vorzugsweise entlang mindestens 90%, dieser Länge vollständig, streckenweise oder punktuell erfolgt.

4. Verfahren nach einem oder mehreren der Ansprüche 1 bis 3, **dadurch gekennzeichnet, dass** das Einschmelzen des Markerelements (6; 7; 8) einen Verfahrensschritt umfasst, bei dem der Füllstab (5) mit horizontal orientierter Füllstab-Längsachse (5a) so gelagert wird, dass sich die Ausnehmung (6) an einer Oberseite der Füllstab-Außenmantelfläche (5b) befindet, wobei das Material des Markerelements (6; 7; 8) mittels einer Heizquelle erhitzt und erweicht wird.

5. Verfahren nach einem oder mehreren der vorhergehenden Ansprüche, **dadurch gekennzeichnet, dass** die Herstellung des Bauteil-Ensembles (9) folgende Verfahrensschritte umfasst:
(a) Bereitstellen des Hohlzylinders (1), der das Mantelglas enthält,
(b) Bereitstellen mehrerer Kernstäbe (4), die das Kernglas enthalten,
(c) Bereitstellen eines Füllstabs (5), der eine Füllstab-Längsachse (5a) aufweist und der das Glas-Füllmaterial enthält,
(d) Erzeugen der mindestens einen Ausnehmung (6) an der Außenmantelfläche (5b) des Füllstabs (5),
(e) Bereitstellen des Markerelements (6; 7; 8),
(f) Anordnen und Einschmelzen des Markerelements (6; 7; 8) in die Ausnehmung (6),
(g) Erzeugen von Kernstab-Bohrungen (3), die sich entlang der Hohlzylinder-Längsachse (1a) erstrecken,
(h) Einbringen des Füllstabs (5) und des Markerelements (6; 7; 8) in die Mittenbohrung (2) und
(i) Einbringen der Kernstäbe (4) in die Kernstab-Bohrungen (3), unter Bildung des Bauteil-Ensembles (9).

6. Verfahren nach einem oder mehreren der vorhergehenden Ansprüche, **dadurch gekennzeichnet, dass** das Markerelement (7; 8) in Form eines zylinderförmigen Bauteils oder in Form einer mit dem Füllstab (5) verbundenen Schicht oder Masse bereitgestellt wird.

7. Verfahren nach einem oder mehreren der vorhergehenden Ansprüche, **dadurch gekennzeichnet, dass** die Ausnehmung (6) eine Bohrung und/oder eine Längsrille in der Außenmantelfläche des Füllstabs (5) umfasst.

8. Verfahren nach einem oder mehreren der vorhergehenden Ansprüche, **dadurch gekennzeichnet, dass** das Markerelement (6; 7; 8) einen luftgefüllten, langgestreckten Hohlraum bildet oder dass es ein Markermaterial enthält, das sich in mindestens einer physikalischen und/oder chemischen Eigenschaft vom Mantelglas und vom Glas-Füllmaterial unterscheidet, wobei die Eigenschaft ausgewählt ist aus: Brechungsindex, Farbe, Fluoreszenz und/oder spezifischer Glasdichte.

9. Halbzeug zur Herstellung einer Mehrkernfaser, umfassend einen eine Mittenbohrung (1a) aufweisenden Hohlzylinder (1), der einen Mantelglasbereich (1b) aus Mantelglas und eine Hohlzylinder-Längsachse (1a), und mehrere mit einem Kernglas belegte Kernglasbereiche (4a) innerhalb des Mantelglasbereichs (1b) aufweist, wobei mindestens ein Teil der Mittenbohrung (2) von einem Glas-Füllstab (5) belegt ist, der eine Füllstab-Längsachse (5a) und eine Füllstab-Außenmantelfläche (5b) aufweist, **dadurch gekennzeichnet, dass** der Füllstab (5) eine sich in Richtung der Füllstab-Längsachse (2) erstreckende Ausnehmung (5) aufweist, in die ein Markerelement (6; 7; 8) aus Markerglas eingesetzt ist oder die das Markerelement (6; 7; 8) bildet, das sich entlang der Mittenbohrung-Längsachse (1a) und der Füllstab-Längsachse (2b) erstreckt.

10. Halbzeug nach Anspruch 9, **dadurch gekennzeichnet, dass** das Markerelement (6; 7; 8) eine Länge hat und dass es entlang mindestens 80% dieser Länge, vorzugsweise entlang mindestens 90% vollständig, streckenweise oder punktuell in die Ausnehmung (5) eingeschmolzen ist.

11. Halbzeug nach Anspruch 9 oder 10, **dadurch gekennzeichnet, dass** das Markerelement einen mit einem Gas gefüllten Kanal umfasst.

12. Halbzeug nach einem oder mehreren der Ansprüche 9 bis 11, **dadurch gekennzeichnet, dass** die Ausnehmung (6) eine Bohrung und/oder eine Längsrille in der Außenmantelfläche (5b) des Füllstabs (5) umfasst, und dass das Halbzeug weiterhin umfasst: den die Mittenbohrung (2) aufweisenden Hohlzylinder (1), mindestens zwei Kernstäbe (4), die das Kernglas enthalten und die Kernglasbereiche (4a) bilden, den in der Mittenbohrung (2) angeordneten Füllstab (5), und mindestens ein in der Ausnehmung (6) des Füllstabs (5) angebrachtes Markerelement (6; 7; 8).

13. Halbzeug nach einem oder mehreren der Ansprüche 9 bis 12, **dadurch gekennzeichnet, dass** das Markerelement (7; 8) in Form eines zylinderförmigen Bauteils oder in Form einer mit dem Füllstab verbundenen Schicht oder Masse vorliegt.

14. Halbzeug nach einem oder mehreren der Ansprüche 9 bis 13, **dadurch gekennzeichnet, dass** das Markerelement (6) einen luftgefüllten, langgestreckten Hohlraum bildet oder dass es ein Markermaterial enthält, das sich in mindestens einer physikalischen und/oder chemischen Eigenschaft vom Mantelglas, vom Kernglas und vom Glas-Füllmaterial unterscheidet, wobei die Eigenschaft ausgewählt ist aus: Brechungsindex, Farbe, Fluoreszenz und/oder spezifischer Glasdichte.

## Claims

1. A method for producing a multicore fiber (20), comprising a method step in which a component group (9) is reshaped to form the multicore fiber (20) or a preform (10) for the multicore fiber (20) and comprises a hollow cylinder (1) comprising a central bore (2) and a hollow cylinder longitudinal axis (1a), which hollow cylinder comprises a cladding glass region (1b) made of cladding glass and a plurality of core glass regions (4a) provided with a core glass, wherein at least a part of the central bore (2) is occupied by a glass filling rod (5) which comprises a filling rod longitudinal axis (5a) and a filling rod outer cladding surface (5b), **characterized in that** a recess (5) extending in the direction of the filling rod longitudinal axis (2) is produced in or on the filling rod (5), into which recess a marker element (6; 7; 8) made of marker glass is inserted or which forms the marker element (6; 7; 8).

2. The method according to claim 1, **characterized in that** the marker element (6; 7; 8) extends along the filling rod longitudinal axis (5a) and is melted into the recess (6) prior to reshaping to form the preform (10) or the multicore fiber (20).

3. The method according to claim 1 or 2, **characterized in that** the marker element (6; 7; 8) has a length and **in that** melting takes place along at least 80% of this length, preferably along at least 90% of this length, completely, in parts or at certain points.

4. The method according to one or more of claims 1 to 3, **characterized in that** the melting of the marker element (6; 7; 8) comprises a method step in which the filling rod (5) with the horizontally oriented filling rod longitudinal axis (5a) is mounted in such a way that the recess (6) is located on an upper side of the filling rod outer cladding surface (5b), wherein the material of the marker element (6; 7; 8) is heated and softened by means of a heat source.

5. The method according to one or more of the preceding claims, **characterized in that** the production of the component group (9) comprises the following method steps:
(a) providing the hollow cylinder (1) containing the cladding glass,
(b) providing a plurality of core rods (4) containing the core glass,
(c) providing a filling rod (5) comprising a filling rod longitudinal axis (5a) and containing the glass filling material,
(d) producing the at least one recess (6) on the outer cladding surface (5b) of the filling rod (5),
(e) providing the marker element (6; 7; 8),
(f) arranging and melting the marker element (6; 7; 8) into the recess (6),
(g) producing core rod bores (3) extending along the hollow cylinder longitudinal axis (1a),
(h) introducing the filling rod (5) and the marker element (6; 7; 8) into the central bore (2), and
(i) introducing the core rods (4) into the core rod bores (3), forming the component group (9).

6. The method according to one or more of the preceding claims, **characterized in that** the marker element (7; 8) is provided in the form of a cylindrical component or in the form of a layer or mass connected to the filling rod (5).

7. The method according to one or more of the preceding claims, **characterized in that** the recess (6) comprises a bore and/or a longitudinal groove in the outer cladding surface of the filling rod (5).

8. The method according to one or more of the preceding claims, **characterized in that** the marker element (6; 7; 8) forms an air-filled, elongate cavity or **in that** it contains a marker material which differs in at least one physical and/or chemical property from the cladding glass and from the glass filling material, wherein the property is selected from: refractive index, color, fluorescence, and/or specific glass density.

9. A semifinished product for producing a multicore fiber, comprising a hollow cylinder (1) comprising a central bore (1a), which hollow cylinder comprises a cladding glass region (1b) made of cladding glass, and a hollow cylinder longitudinal axis (1a), and a plurality of core glass regions (4a) provided with a core glass within the cladding glass region (1b), wherein at least a part of the central bore (2) is occupied by a glass filling rod (5) which comprises a filling rod longitudinal axis (5a) and a filling rod outer cladding surface (5b), **characterized in that** the filling rod (5) comprises a recess (5) which extends in the direction of the filling rod longitudinal axis (2) and into which a marker element (6; 7; 8) made of marker glass is inserted, or which forms the marker element (6; 7; 8) which extends along the central bore longitudinal axis (1a) and the filling rod longitudinal axis (2b).

10. The semifinished product according to claim 9, **characterized in that** the marker element (6; 7; 8) has a length and **in that** it is melted into the recess (5) completely, in parts or at certain points along at least 80% of this length, preferably along at least 90%.

11. The semifinished product according to claim 9 or 10, **characterized in that** the marker element comprises a channel filled with a gas.

12. The semifinished product according to one or more of claims 9 to 11, **characterized in that** the recess (6) comprises a bore and/or a longitudinal groove in the outer cladding surface (5b) of the filling rod (5), and **in that** the semifinished product further comprises: the hollow cylinder (1) comprising the central bore (2), at least two core rods (4) containing the core glass and forming the core glass regions (4a), the filling rod (5) arranged in the central bore (2), and at least one marker element (6; 7; 8) attached in the recess (6) of the filling rod (5).

13. The semifinished product according to one or more of claims 9 to 12, **characterized in that** the marker element (7; 8) is present in the form of a cylindrical component or in the form of a layer or mass connected to the filling rod.

14. The semifinished product according to one or more of claims 9 to 13, **characterized in that** the marker element (6) forms an air-filled, elongate cavity, or **in that** it contains a marker material which differs in at least one physical and/or chemical property from the cladding glass, the core glass and the glass filling material, wherein the property is selected from: refractive index, color, fluorescence, and/or specific glass density.

## Revendications

1. Procédé pour la fabrication d'une fibre multicœur (20), comprenant une étape de procédé lors de laquelle un ensemble de composants (9) est transformé pour former la fibre multicœur (20) ou une préforme (10) pour la fibre multicœur (20) qui comprend un cylindre creux (1) présentant un alésage central (2) et un axe longitudinal de cylindre creux (1a), lequel cylindre creux présente une zone de verre pour gaine (1b) en verre pour gaine et plusieurs zones de verre pour cœur (4a) garnies d'un verre pour cœur, dans lequel au moins une partie de l'alésage central (2) est garnie d'une tige de remplissage en verre (5) qui présente un axe longitudinal de tige de remplissage (5a) et une surface de gaine extérieure de tige de remplissage (5b), **caractérisé en ce que** dans ou sur la tige de remplissage (5) est produit un évidement (5) s'étendant dans la direction de l'axe longitudinal de tige de remplissage (2) et dans lequel un élément de marquage (6 ; 7 ; 8) en verre de marquage est inséré ou lequel forme l'élément de marquage (6 ; 7 ; 8).

2. Procédé selon la revendication 1, **caractérisé en ce que** l'élément de marquage (6 ; 7 ; 8) s'étend le long de l'axe longitudinal de tige de remplissage (5a) et est fondu dans l'évidement (6) avant d'être transformé en préforme (10) ou en fibre multicœur (20).

3. Procédé selon la revendication 1 ou 2, **caractérisé en ce que** l'élément de marquage (6 ; 7 ; 8) possède une longueur et **en ce que** la fusion est effectuée complètement, par tronçons ou par endroits le long d'au moins 80 % de ladite longueur, de préférence le long d'au moins 90 % de ladite longueur.

4. Procédé selon l'une ou plusieurs des revendications 1 à 3, **caractérisé en ce que** la fusion de l'élément de marquage (6 ; 7 ; 8) comprend une étape de procédé lors de laquelle la tige de remplissage (5) est montée avec l'axe longitudinal de tige de remplissage (5a) orienté horizontalement de sorte que l'évidement (6) est situé sur une face supérieure de la surface de gaine extérieure de tige de remplissage (5b), dans lequel le matériau de l'élément de marquage (6 ; 7 ; 8) est chauffé et ramolli au moyen d'une source de chaleur.

5. Procédé selon l'une ou plusieurs des revendications précédentes, **caractérisé en ce que** la fabrication de l'ensemble de composants (9) comprend les étapes de procédé suivantes :
(a) fourniture du cylindre creux (1) contenant le verre pour gaine,
(b) fourniture de plusieurs tiges de cœur (4) contenant le verre pour cœur,
(c) fourniture d'une tige de remplissage (5) présentant un axe longitudinal de tige de remplissage (5a) et contenant le matériau de remplissage en verre,
(d) production de l'au moins un évidement (6) sur la surface de gaine extérieure (5b) de la tige de remplissage (5),
(e) fourniture de l'élément de marquage (6 ; 7 ; 8),
(f) disposition et fusion de l'élément de marquage (6 ; 7 ; 8) dans l'évidement (6),
(g) production d'alésages pour tiges de cœur (3) s'étendant le long de l'axe longitudinal de cylindre creux (1a),
(h) introduction de la tige de remplissage (5) et de l'élément de marquage (6 ; 7 ; 8) dans l'alésage central (2), et
(i) introduction des tiges de cœur (4) dans les alésages pour tiges de cœur (3) pour former l'ensemble de composants (9).

6. Procédé selon l'une ou plusieurs des revendications précédentes, **caractérisé en ce que** l'élément de marquage (7 ; 8) est fourni sous la forme d'un composant cylindrique ou sous la forme d'une couche ou d'une matière reliée à la tige de remplissage (5).

7. Procédé selon l'une ou plusieurs des revendications précédentes, **caractérisé en ce que** l'évidement (6) comprend un alésage et/ou une rainure longitudinale dans la surface de gaine extérieure de la tige de remplissage (5).

8. Procédé selon l'une ou plusieurs des revendications précédentes, **caractérisé en ce que** l'élément de marquage (6 ; 7 ; 8) forme un espace creux allongé rempli d'air ou **en ce qu'**il contient un matériau de marquage qui se distingue par au moins une propriété physique et/ou chimique du verre pour gaine et du matériau de remplissage en verre, dans lequel la propriété est choisie parmi : indice de réfraction, couleur, fluorescence et/ou densité de verre spécifique.

9. Demi-produit pour la fabrication d'une fibre multicœur, comprenant un cylindre creux (1) présentant un alésage central (1a) et présentant une zone de verre pour gaine (1b) en verre pour gaine et un axe longitudinal de cylindre creux (1a), et plusieurs zones de verre pour cœur (4a) garnies d'un verre pour cœur à l'intérieur de la zone de verre pour gaine (1b), dans lequel au moins une partie de l'alésage central (2) est garnie d'une tige de remplissage en verre (5) qui présente un axe longitudinal de tige de remplissage (5a) et une surface de gaine extérieure de tige de remplissage (5b), **caractérisé en ce que** la tige de remplissage (5) présente un évidement (5) s'étendant dans la direction de l'axe longitudinal de tige de remplissage (2) et dans lequel un élément de marquage (6 ; 7 ; 8) en verre de marquage est inséré ou lequel forme l'élément de marquage (6 ; 7 ; 8), lequel élément de marquage s'étend le long de l'axe longitudinal d'alésage central (1a) et de l'axe longitudinal de tige de remplissage (2b).

10. Demi-produit selon la revendication 9, **caractérisé en ce que** l'élément de marquage (6 ; 7 ; 8) possède une longueur et **en ce qu'**il est fondu dans l'évidement (5), complètement, par sections ou par endroits, le long d'au moins 80 % de ladite longueur, de préférence le long d'au moins 90 %.

11. Demi-produit selon la revendication 9 ou 10, **caractérisé en ce que** l'élément de marquage comprend un canal rempli d'un gaz.

12. Demi-produit selon l'une ou plusieurs des revendications 9 à 11, **caractérisé en ce que** l'évidement (6) comprend un alésage et/ou une rainure longitudinale dans la surface de gaine extérieure (5b) de la tige de remplissage (5), et **en ce que** le demi-produit comprend en outre : le cylindre creux (1) présentant l'alésage central (2), au moins deux tiges de cœur (4) qui contiennent le verre pour cœur et forment les zones de verre pour cœur (4a), la tige de remplissage (5) disposée dans l'alésage central (2), et au moins un élément de marquage (6 ; 7 ; 8) placé dans l'évidement (6) de la tige de remplissage (5).

13. Demi-produit selon l'une ou plusieurs des revendications 9 à 12, **caractérisé en ce que** l'élément de marquage (7 ; 8) se présente sous la forme d'un composant cylindrique ou sous la forme d'une couche ou d'une matière reliée à la tige de remplissage.

14. Demi-produit selon l'une ou plusieurs des revendications 9 à 13, **caractérisé en ce que** l'élément de marquage (6) forme un espace creux allongé rempli d'air ou **en ce qu'**il contient un matériau de marquage qui se distingue du verre pour gaine, du verre pour cœur et du matériau de remplissage en verre par au moins une propriété physique et/ou chimique, dans lequel la propriété est choisie parmi : indice de réfraction, couleur, fluorescence et/ou densité de verre spécifique.
